# EUROPEAN PATENT APPLICATION

(11) **EP 4 787 771 A1**
(43) Date of publication of application: **05.08.2026**
(21) Application number: 25154594.3
(22) Date of filing: 29.01.2025
(51) Int. Cl.: H04L 9/08, H04L 9/32, H04L 9/00

(54) **A METHOD FOR PERFORMING A DIGITAL SIGNATURE**

(71) Applicant: Blockdaemon ApS, 8000 Aarhus C (DK)
(72) Inventor: Bæksvang Østergaard, Michael, 8000 Aarhus C (DK); Illeborg Pagter, Jakob, 8000 Aarhus C (DK); Pelle Jakobsen, Thomas, 8000 Aarhus C (DK)
(74) Representative: Inspicos P/S

(57) **Abstract**

A method for performing a digital signature is disclosed. At least two sharings of a private signature key are provided. A first sharing is shared among a hot node (2) and a first of at least two cold nodes (3), and a second sharing is shared among the hot node (2) and a second of the at least two cold nodes (3). A signing request message is generated, and one of the at least two sharings of the private signature key is selected. The signing request message is provided to the location of the cold node (3) holding key shares of the selected sharing, and to the hot node (2). A first digital signature share is generated, based on the signing request message and the key shares of the selected sharing held by the cold node (3), and a second digital signature share is generated, based on the signing request message and the key shares of the selected sharing held by the hot node (2). A digital signature is generated by combining the first digital signature share and the second digital signature share.

## Description

### FIELD OF THE INVENTION

The present invention relates to a method for performing a digital signature using a private signature key being shared among a hot node and at least one cold node. The method according to the invention allows for high availability of the private signature key without compromising security of the system.

### BACKGROUND OF THE INVENTION

Ownership of cryptocurrency assets, such as Bitcoin or Ethereum, requires holding a private cryptographic key for a digital signature scheme. The corresponding public key is associated with a public account, or address, on the cryptocurrency blockchain. In order to transfer assets from one account to another, a transaction must be digitally signed using the private signature key of the sender account, and the signed transaction must be submitted to the blockchain network.

Protecting the private signature key from theft is a major concern for holders of cryptocurrency assets, since anyone with access to the private signature key has access to the assets on the corresponding cryptocurrency account. To this end, asset owners may store their private signature key in a so-called cryptocurrency wallet. This is an application that helps protect the private signature key. Simple wallets store the private signature key on a device of the owner, e.g. on a disk, possibly encrypted under a password or similar. This may provide sufficient security for owners of low-value assets, but for holders of large amounts of funds and other high-value assets, such as cryptocurrency exchanges, additional security enhancements are often applied.

One such security enhancement is to deploy the wallet in an environment that is disconnected from the Internet, e.g. on a computer without Internet connection. This is sometimes referred to as a 'cold wallet' or a 'cold node'. In this case, when a digital signature for a transaction is required, a cold node operator, typically the asset owner, must visit the cold wallet location, possibly carrying the transaction to be signed on an offline medium, such as a USB stick or similar. The required signature is then generated with the cold wallet, and the required signature is transferred back to a computer with Internet connection, e.g. by means of a suitable offline medium. Storing the private signature key in such a cold wallet essentially eliminates the risk of online attacks, and thus enhances security. However, this involves inconveniences, due to the need for an operator to manually handle the offline communication with the cold wallet.

Another security enhancement may be applying secure multiparty computation (MPC), in which the private signature key is split into multiple key shares, distributed among multiple nodes, where each individual key share reveals no information about the private signature key. In this case the signature is generated by the nodes in collaboration, normally without combining the key shares. Accordingly, none of the nodes constitutes a single point of trust, and the security of the system is therefore enhanced.

Moreover, the two approaches described above may be combined by ensuring that at least one of the nodes applied in the MPC scheme is a cold node, i.e. is disconnected from the Internet. However, this may be a challenge, since the at least one cold node needs to be accessible by an operator at the point in time where a digital signature is required. In addition, some MPC schemes imply a signing process that may require several rounds of interactions between the nodes.

### DESCRIPTION OF THE INVENTION

It is an object of embodiments of the invention to provide a method for performing a digital signature which simultaneously ensure high accessibility and accessibility of digital signatures and a high level of security.

The invention provides a method for performing a digital signature using a digital signature system, the digital signature system comprising at least one hot node and at least two cold nodes, the at least two cold nodes being arranged at separate locations and/or being accessible to separate operators, the method comprising the steps of:
- providing at least two sharings of a private signature key, each sharing comprising at least two key shares,
   - where a first sharing of the private signature key is shared among the at least one hot node and a first of the at least two cold nodes, in such a manner that the hot node and the first cold node each holds at least one key share of the first sharing and neither the hot node nor the first cold node holds all of the key shares of the first sharing, and
   - where a second sharing of the private signature key is shared among the at least one hot node and a second of the at least two cold nodes, in such a manner that the hot node and the second cold node each holds at least one key share of the second sharing and neither the hot node nor the second cold node holds all of the key shares of the second sharing,
- generating a signing request message,
- selecting one of the at least two sharings of the private signature key,
- providing the signing request message to the location of the cold node holding key shares of the selected sharing, and generating a first digital signature share, based on the signing request message and the key shares of the selected sharing held by the cold node,
- providing the signing request message to the hot node, and generating a second digital signature share, based on the signing request message and the key shares of the selected sharing held by the hot node, and
- generating a digital signature by combining the first digital signature share and the second digital signature share.

Thus, the method according to the invention is a method for performing a digital signature. The method uses a digital signature system comprising at least one hot node and at least two cold nodes. In the present context the term 'hot node' should be interpreted to mean a node which may be accessed via online communication means. For instance, the hot node may be running in a front-end system or on hardware that is directly connected to or connectable to the Internet. In the present context the term 'cold node' should be interpreted to mean a node which can essentially not be accessed via online communication means. For instance, the cold nodes may be disconnected from the Internet, possibly except for very limited and well defined periods of time. This will be described in further detail below.

The at least two cold nodes are arranged at separate locations and/or they are accessible to separate operators. Thereby, if one location and/or one operator is unavailable at a certain point in time, at least one other location and/or one other operator may be available. In other words, if one of the cold nodes is not available and/or accessible at a given point in time, there is a good chance that at least one of the other cold nodes will be available and/or accessible.

In the method according to the invention, at least two sharings of a private signature key are initially provided, each sharing comprising at least two key shares. A first sharing of the private signature key is shared among the at least one hot node and a first of the at least two cold nodes. Moreover, this is done in such manner that the hot node and the first cold node each holds at least one key share of the first sharing and neither the hot node nor the first cold node holds all of the key shares of the first sharing. Thus, neither the hot node nor the first cold node constitutes a single point of trust with regard to the private signature key, and the participation of both will be required in order to generate a digital signature by means of the private signature key, and based on the first sharing thereof.

Similarly, a second sharing of the private signature key is shared among the at least one hot node and a second of the at least two cold nodes, in such a manner that the hot node and the second cold node each holds at least one key share of the second sharing and neither the hot node nor the second cold node holds all of the key shares of the second sharing.

Accordingly, the first sharing has at least one key share held by the first cold node, but none at the second cold node, whereas the second sharing has at least one key share held by the second cold node, but none at the first cold node. Thus, a digital signature can be generated by means of the private signature key, either based on the first sharing and with the participation of the first cold node, or based on the second sharing and with the participation of the second cold node. This provides some redundancy in the system.

As described above, the cold nodes are arranged at separate locations and/or are accessible to separate operators. If one of the cold nodes is unavailable and/or inaccessible, e.g. due to restricted opening hours and/or the unavailability of the relevant operator, then the other cold node may be available and/or accessible. Due to the distribution of the key shares of the first and second sharings described above, the accessibility and availability of at least one sharing of the private signature key is therefore high, thus ensuring that a digital signature can be provided when required. Furthermore, since at least one of the key shares of each sharing is held by a cold node, and because the participation of at least two nodes is required in order to generate the digital signature, a high level of security is obtained. Moreover, even if an adversary manages to compromise one of the nodes, e.g., by hacking or an insider attack, this does not enable the adversary to steal the key or otherwise sign messages of his own choice.

Next, a signing request message is generated. This may be occasioned by an owner of cryptocurrency assets wishing to transfer assets to another account, and thus being in need of a digital signature for the transaction. In the present context the term 'signing request message' should be interpreted to mean a message that contains information required to construct the message that is actually signed by the digital signature system. For example, the signing request message could consist of an Ethereum destination account and a specification of how much fund to transfer to the destination account. Based on this information and possibly some additional data, an unsigned Ethereum transaction can be constructed, and the unsigned Ethereum transaction is then signed by the digital signature system. In another example, the signing request message may consist of the unsigned Ethereum transaction itself, in which case no further work is needed to construct the message to sign.

Next, one of the at least two sharings of the private signature key is selected. This selection may, e.g., be based on the current availability and/or accessibility of the cold nodes holding keys shares of the respective sharings. If two of more cold nodes are available and accessible, then the sharing may be selected randomly or the sharing with the most conveniently located cold node may be selected.

The signing request message is then provided to the location of the cold node holding key shares of the selected sharing, in order to gain access to the at least one key share held by this cold node. This is done in an offline manner, since the cold node, due to its nature, can not be accessed via online communication means. Accordingly, some kind of physical interaction between an operator and the cold node is required in order to provide the signing request message to the cold node. Furthermore, a first digital signature share is generated, based on the signing request message and the key shares of the selected sharing held by the cold node.

The signing request message is further provided to the hot node, and a second digital signature share is generated, based on the signing request message and the key shares of the selected sharing held by the hot node. The signing request message may be provided to the hot node via online communication means, e.g. via an Internet connection, or via offline communication means.

Finally, a digital signature is generated by combining the first digital signature share and the second digital signature share. Accordingly, the digital signature is generated as a combination of the digital signature share that was generated based on the key shares held by the relevant cold node, i.e. the first digital signature share, and the digital signature share that was generated based on the key shares held by the hot node, i.e. the second digital signature share. The participation of the cold node as well as the fact that key shares from multiple nodes are required ensures a high level of security. Furthermore, since it is possible to select among at least two sharings of the private signature key, where the cold nodes holding key shares of the respective sharings are arranged at separate locations and/or are accessible to separate operators, there is a high likelihood that at least one of the cold nodes will be available and/or accessible for performing digital signature at any given time. Thus, the accessibility and availability of the digital signature key is maximised.

The step of providing at least two sharings of the private signature key may comprise the steps of a trusted party generating the at least two sharings and distributing the key shares among the at least one hot node and the at least two cold nodes.

According to this embodiment, the initial key generating ceremony, where the sharings are generated and the key shares distributed to the relevant nodes, is performed by a trusted party. Thus, this trusted party learns and/or is in the possession of the full private signature key, and it may therefore be regarded as constituting a single point of trust. However, the period during which the trusted party is in the possession of the private signature key can be limited to the time period necessary for generating the sharings of the private signature key, and strict security measures may be applied during this limited time period. Accordingly, the risk of the private signature key leaking or being compromised during the generation of the sharings of the private signature key may be regarded as minimal, and at least as acceptable in view of the convenience obtained by allowing a trusted party to generate the sharings of the private signature key.

As an alternative, the step of providing the at least two sharings of the private signature key may comprise the at least one hot node and the at least two cold nodes generating the at least two sharings by means of secure multiparty computation during an initial key generation ceremony, and the at least two cold nodes may be communicatively isolated after the initial key generation ceremony has been completed.

According to this embodiment, the sharings of the private signature key are generated by the respective participating nodes rather than by a trusted party. This is done by means of secure multiparty computation, i.e. by the respective nodes in common. This has the advantage that it is not necessary to involve a trusted party that may constitute a single point of trust, and that none of the participating nodes will learn or be in the possession of the entire private signature key at any point in the process. In fact, the entire private signature key will not be assembled at any time. On the other hand, this approach requires that the cold nodes are temporarily allowed to communicate with the hot node in order to perform the secure multiparty computation. However, the period during which the cold nodes are allowed to communicate can be limited to only the time period necessary for generating the sharings of the private signature key, and once they have been communicatively isolated following the completion of the key generation ceremony they may remain so. Moreover, the allowed communication to and from the cold nodes may be restricted to communication with the hot node, thus essentially eliminating the risk of online attacks. Accordingly, this limited communication to and from the cold nodes may be regarded as acceptable.

As another alternative, the step of providing at least two sharings of the private signature key may comprise the step of, for each of the at least two sharings, providing a sharing of a master key, and the cold nodes and the hot nodes may generate key shares upon receipt of the signing request message, and based on shares of the master key and information included in the signing request message.

According to this embodiment, key shares for a new private signing key can be generated at the cold nodes and the hot node based on the shares of a master key that have already been provided. This is useful in the case where the signing process is repeated many times, with different private signing keys. As one example, the master key shares initially provided may be shares of a BIP32 master key, and the signing request message may include a BIP32 derivation path that specifies a key derivation, and each node may generate a key share based on its share of the BIP32 master key and the provided BIP32 derivation path, in order to obtain a share of a derived BIP32 key, and the node may then use the derived key share in the signing process.

The key shares are generated based on shares of a master key that has initially been shared among the hot node and the respective cold nodes, e.g. by a trusted party or by the respective nodes by means of secure multiparty computation, similarly to the approaches described above with reference to the sharings of the private signature key. The shares of the master key may be held by the respective nodes under strict security and confidentiality conditions, since they are not applied for the actual signing process.

The at least two cold nodes may be located in separate time zones. The cold nodes may be hosted at suitable facilities, where it is necessary to gain physical access in order to access the respective cold nodes. Such facilities may have specific opening hours, in which case it will not be possible to access a given facility at any given time. Moreover, operators required for accessing the respective facilities may have specified working hours, and outside these they may be unavailable, or at least applying their services may be subject to surplus payment. By arranging the cold nodes in different time zones, the likelihood that, at any given time, at least one of the cold nodes is arranged in a time zone where the facility hosting the cold node is open for business and it is within the working hours of a relevant operator, is increased. Accordingly, the availability of the private signature key is improved.

For instance, the system may include a sufficient number of cold nodes, and these may be distributed across in time zones in such a manner that at least one of the facilities is open at any given time, thus ensuring that the private signature key is available for performing a digital signature around the clock.

The step of generating a digital signature may comprise the step of providing the first digital signature share to the hot node, and the digital signature may be generated at the hot node.

According to this embodiment, once the first digital signature share has been generated at the relevant cold node, it is provided to the hot node, e.g. by means of suitable offline communication means. The signing request message is also provided to the hot node, as described above. This may be simultaneously with providing the first digital signature share to the hot node. Alternatively, the signing request message may have been provided to the hot nodes previously, e.g. substantially simultaneously with providing it to the cold node, or it may be provided subsequently. In any event, the hot node will eventually be in the possession of the first digital signature share as well as the second digital signature share, generated by itself, and it is therefore able to combine these into the resulting digital signature.

As an alternative, the step of combining the first digital signature share and the second digital signature share into the digital signature may be performed at any other suitable location or device, to which the first digital signature share and the second digital signature share may be provided.

The method may further comprise the step of each of the cold nodes generating one or more pre-signature shares based on the key shares held by the respective cold node, and the step of generating the first digital signature share may be performed based on a pre-signature share held by the cold node holding key shares of the selected sharing.

Some signature schemes, when implemented using MPC, such as the BLS signature scheme, allow a node to generate a signature share directly based on the provided signing request message and its share of the private signing key. Other signature schemes, however, such as the ECDSA and Schnorr signature schemes, require the nodes to engage in one or more rounds of communication with each other in order to generate signature shares.

These additional rounds of communication typically do not depend on the signing request message and can therefore be performed in advance. Each node will use its key shares in these communication rounds, and as a result, each node will receive a number of pre-signature shares. The pre-signature shares can later be used in the signature generating process, instead of the key shares, in order to generate signature shares without the need to communicate with the other nodes.

So to ensure that a cold node operator only needs to visit the cold node a single time during a signature generation process, a number of pre-signature shares are often generated in advance, for example in a process following immediately after the initial key generation process.

The step of selecting one of the at least two sharings may be performed based on accessibility of the cold nodes holding the key shares of the respective sharings. As described above, this could include selecting a sharing where a facility hosting the corresponding cold node is open for business and/or where a relevant operator is available for accessing the location of the cold node.

The step of providing the signing request message to the location of the cold node holding key shares of the selected sharing may comprise an operator transporting the signing request message to the location of the cold node.

According to this embodiment, an operator physically brings the signing request message to the location of the cold node, preferably by means of an offline medium or data carrier, such as a USB stick, a disk, etc. The operator may furthermore interact directly with the cold node in order to provide the signing request message to the cold node. Alternatively, the operator may provide the signing request message to the cold node via a some other intermediate system, e.g. including machine readable codes, such as QR codes, and/or based on suitable mechanical devices. This minimises the risk of the cold node being compromised.

The operator may further transport the first digital signature share away from the cold node and to a location where the digital signature is to be generated, e.g. to the hot node, in a similar manner.

The method may further comprise the step of each of the at least two cold nodes and the hot node enforcing a signing policy, and a generated digital signature share may only be released by a given node if the signing policy is complied with.

According to this embodiment, an additional layer of security is added to the system, in the form of a signing policy that needs to be enforced by the nodes participating in the digital signing process. The signing policy may, e.g., specify who is authorised to request a digital signature, how many persons are required for approving a request for a digital signature, identification means, such as passwords, a maximum daily amount of funds allowed to transfer from the account, and/or any other suitable kind of policy governing the signing process.

Upon receipt of the signing request message, each of the involved nodes checks whether or not the applicable signing policy is complied with, and the generated digital signature share is only released if this is the case. The nodes may all apply the same policy, or they may each apply individual policies. This significantly reduces the risk of unauthorised or malicious parties obtaining a digital signature based on the private signature key.

### BRIEF DESCRIPTION OF THE DRAWINGS

The invention will now be described in further detail with reference to the accompanying drawings in which
Fig. 1 is a schematic diagram illustrating a prior art method for performing a digital signature, and
Fig. 2 is a schematic diagram illustrating method for performing a digital signature in accordance with a method according to an embodiment of the invention.

### DETAILED DESCRIPTION OF THE DRAWINGS

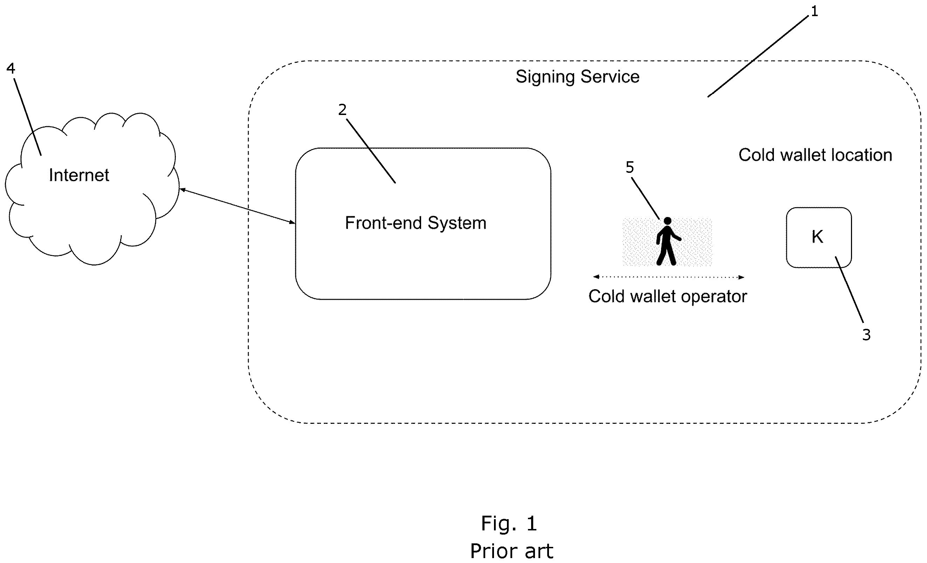

Fig. 1 is a schematic diagram illustrating a prior art method for performing a digital signature. The method applies a digital signature system 1 comprising a hot node 2 and a cold node 3. The hot node 2 is allowed to perform online communication, and is thus connected to or connectable to the Internet 4. The cold node 3 is essentially offline, i.e. it is disconnected from the Internet, at least for the majority of the time.

The cold node 3 holds a private signature key, K. When a digital signature based on the private signature key, K, is required, a signing request message is generated, and an operator 5 provides the signing request message to the location of the cold node 3, in an offline manner, e.g. by physically transporting the signing request message to the location of the cold node 3. At the cold node 3, a digital signature is generated, based on the signing request message and the private signature key, K, e.g. in the form of a signed cryptocurrency transaction. The operator 5 then transports the digital signature to the hot node 2, where the digital signature is applied for a relevant transaction, e.g. by submitting the signed transaction to a cryptocurrency blockchain, via the Internet.

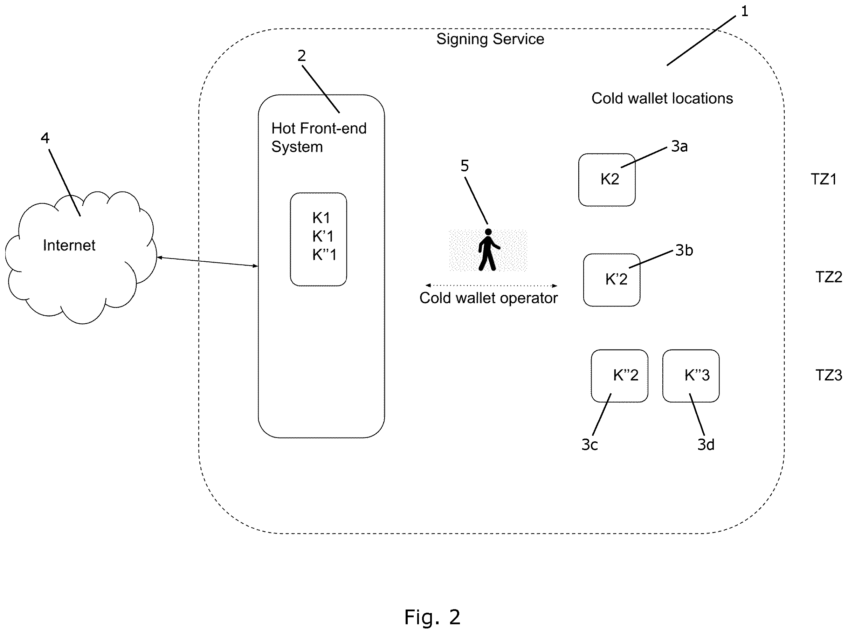

Fig. 2 is a schematic diagram illustrating a method for performing a digital signature in accordance with a method according to an embodiment of the invention. The method applies a digital signature system 1 comprising a hot node 2 and a number of cold nodes 3. Similarly to the prior art method described above with reference to Fig. 1, the hot node 2 is allowed to perform online communication, and is thus connected to or connectable to the Internet 4, and the cold nodes 3 are essentially offline, i.e. they are disconnected from the Internet, at least for the majority of the time.

In the embodiment illustrated in Fig. 2, three sharings of the private signature key, K, are generated. A first sharing is shared among the hot node 2 and a first cold node 3a, in such a manner that the hot node 3 holds key share K1 and the first cold node 3a hold key share K2. A second sharing is shared among the hot node 2 and a second cold node 3b, in such a manner that the hot node 2 holds key share K'1 and the second cold node 3b holds key share K'2. Finally, a third sharing is shared among the hot node 2, a third cold node 3c and a fourth cold node 3d, in such a manner that the hot node 2 hold key share K"1, the third cold node 3c holds key share K"2, and the fourth cold node 3d holds key share K"3.

In order to perform a digital signature based on the private signature key, the key shares of one of the three sharings needs to be applied. Thus, this requires key shares held by the hot node 2 as well as key shares held by at least one of the cold nodes 3.

The cold nodes 3 are located in separate time zones in the sense that the first cold node 3a is located in a first time zone, TZ1, the second cold node 3b is located in a second time zone, TZ2, and the third cold node 3c as well as the fourth cold node 3d are located in a third time zone, TZ3. Accordingly, the cold nodes 3 holding key shares of the respective three sharings of the private signature key are located in separate time zones. Thus, in each of the three time zones, the key shares held by (a) cold node(s) of one of the sharings of the private signature key is available.

When a digital signature based on the private signature key is required, a signing request message is generated. Next, one of the sharings of the private signature key is selected. The selection of the sharing could, e.g., be made based on the availability of the respective cold nodes 3. For instance, the selected sharing may be the one where the cold node(s) 3 holding key shares of the selected sharing is/are located within a time zone which is currently within normal working hours or opening hours of a facility hosting the cold node(s) 3.

The signing request message is then provided to the hot node 2 as well as to the cold node 3 holding key shares of the selected sharing. The signing request message is provided to the relevant cold node 3 by an operator 5, in a manner similar to the one described above with reference to Fig. 1.

At the cold node 3, a first digital signature share is generated, based on the signing request message and on the key shares held by the cold node 3. Similarly, a second digital signature share is generated, at the hot node 2, based on the signing request message and on the key shares of the selected sharing held by the hot node 2.

The operator 5 then provides the first digital signature share to the hot node 3. Since the hot node 2 is connected to the Internet 4, this may be done in an online manner. Alternatively, the operator 5 may physically transport the first digital signature share from the location of the selected cold node 3 to another location, where the first digital signature share can be provided to the hot node 2. The first digital signature share and the second digital signature share are then combined into a digital signature, at the hot node 2.

As an alternative, the first digital signature share and the second digital signature share may be provided to a separate location or device, where they are combined into the resulting digital signature.

In the case that the third sharing of the private signature key is selected, it may be necessary to physically provide the signing request message to the third cold node 3c as well as to the fourth cold node 3d, and to obtain digital signature shares from each of these cold nodes 3c, 3d. This may require activation of two operators 5, one for contacting each of the relevant cold nodes 3c, 3d. As an alternative, the third sharing may be a threshold sharing, such as a Shamir secret sharing, where only two of the three key shares, K"1, K"2 and K"3, are required in order to generate a valid digital signature. In this case, only one of the cold nodes 3c, 3d needs to be contacted, and the most convenient one may be selected.

## Claims

1. A method for performing a digital signature using a digital signature system (1), the digital signature system (1) comprising at least one hot node (2) and at least two cold nodes (3), the at least two cold nodes (3) being arranged at separate locations and/or being accessible to separate operators (5), the method comprising the steps of:
- providing at least two sharings of a private signature key, each sharing comprising at least two key shares,
- where a first sharing of the private signature key is shared among the at least one hot node (2) and a first of the at least two cold nodes (3), in such a manner that the hot node (2) and the first cold node (3) each holds at least one key share of the first sharing and neither the hot node (2) nor the first cold node (3) holds all of the key shares of the first sharing, and
- where a second sharing of the private signature key is shared among the at least one hot node (2) and a second of the at least two cold nodes (3), in such a manner that the hot node (2) and the second cold node (3) each holds at least one key share of the second sharing and neither the hot node (2) nor the second cold node (3) holds all of the key shares of the second sharing,
- generating a signing request message,
- selecting one of the at least two sharings of the private signature key,
- providing the signing request message to the location of the cold node (3) holding key shares of the selected sharing, and generating a first digital signature share, based on the signing request message and the key shares of the selected sharing held by the cold node (3),
- providing the signing request message to the hot node (2), and generating a second digital signature share, based on the signing request message and the key shares of the selected sharing held by the hot node (2), and
- generating a digital signature by combining the first digital signature share and the second digital signature share.

2. A method according to claim 1, wherein the step of providing at least two sharings of the private signature key comprises the steps of a trusted party generating the at least two sharings and distributing the key shares among the at least one hot node (2) and the at least two cold nodes (3).

3. A method according to claim 1, wherein the step of providing the at least two sharings of the private signature key comprises the at least one hot node (2) and the at least two cold nodes (3) generating the at least two sharings by means of secure multiparty computation during an initial key generation ceremony, and wherein the at least two cold nodes (3) are communicatively isolated after the initial key generation ceremony has been completed.

4. A method according to claim 1, wherein the step of providing at least two sharings of the private signature key comprises the step of, for each of the at least two sharings, providing a sharing of a master key, and wherein the cold nodes (3) and the hot nodes (2) generate key shares upon receipt of the signing request message, and based on shares of the master key and information included in the signing request message.

5. A method according to any of the preceding claims, wherein the at least two cold nodes (3) are located in separate time zones.

6. A method according to any of the preceding claims, wherein the step of generating a digital signature comprises the step of providing the first digital signature share to the hot node (2), and wherein the digital signature is generated at the hot node (2).

7. A method according to any of the preceding claims, further comprising the step of each of the cold nodes (3) generating one or more pre-signature shares based on the key shares held by the respective cold node (3), and wherein the step of generating the first digital signature share is performed based on a pre-signature share held by the cold node (3) holding key shares of the selected sharing.

8. A method according to any of the preceding claims, wherein the step of selecting one of the at least two sharings is performed based on accessibility of the cold nodes (3) holding the key shares of the respective sharings.

9. A method according to any of the preceding claims, wherein the step of providing the signing request message to the location of the cold node (3) holding key shares of the selected sharing comprises an operator (5) transporting the signing request message to the location of the cold node (3).

10. A method according to any of the preceding claims, further comprising the step of each of the at least two cold nodes (3) and the hot node (2) enforcing a signing policy, and wherein a generated digital signature share is only released by a given node (2, 3) if the signing policy is complied with.
